Europäisches Patentamt

(19) European Patent Office

Office européen des brevets

(11) Publication number: **0 127 973**
**B1**

(12) **EUROPEAN PATENT SPECIFICATION**

(45) Date of publication of patent specification: **19.11.87**

(51) Int. Cl.⁴: **A 61 D 3/00, A 01 K 15/00**

(21) Application number: **84303341.6**

(22) Date of filing: **17.05.84**

(54) **Device for holding and manipulating livestock during medical treatment.**

(30) Priority: **06.06.83 IQ 7183**

(43) Date of publication of application:
**12.12.84 Bulletin 84/50**

(45) Publication of the grant of the patent:
**19.11.87 Bulletin 87/47**

(84) Designated Contracting States:
**DE FR GB NL**

(56) References cited:
**GB-A- 110 782**
**US-A-2 713 326**
**US-A-4 195 595**

(73) Proprietor: **Al-Saadi, Hussein Abdulkareem, Dr.**
**College of Veterinary Medicine University of Baghdad**
**Baghdad (IQ)**

(72) Inventor: **Al-Saadi, Hussein Abdulkareem, Dr.**
**College of Veterinary Medicine University of Baghdad.**
**Baghdad (IQ)**

(74) Representative: **Barker, Rosemary Anne et al**
**Barlow, Gillett & Percival 94 Market Street**
**Manchester M1 1PJ (GB)**

Courier Press, Leamington Spa, England.

## Description

This invention relates to a device for holding and manipulating livestock during medical treatment.

Traditionally, cases of uterine torsion have been treated either by foetal rotation through the vagina, or folling of the animal (Roberts 1971). Schafer (1946) however, applied a board on rolling the animal. These treatments were not applicable in cases of severe emphysematous foetus or complete urine torsion because of the resulting incidence of maternal death in cattle (11—18%; Williams, 1943; Roberts 1971) and in horses (40—50%; Derivaux and Dewalque, 1963; Vandelplassche et al. 1972). Also foetal mortality rate reached as high as 60% in cattle (Pearson, 1971) and in horses (Vanderplassche et al. 1972). This is in addition to the fact that such techniques are cumbersome to the obstreticians.

U.S. Specification No. 2713326 describes a useful device for holding and manipulating livestock comprising a rotatable frame inside which an animal may be secured.

The problem of the present invention is provision of a similar device which is more effective than hitherto in treatment of uterine torsion and less stressful to the animals as well as to the obstetricians. Additionally, the device should also be useful in treatment for displacement of some other organs such as the abomascum in cattle and caecum in horses and for surgical manipulation, clinical examination and insemination. Furthermore, the device should also be capable of use in transportation of animals.

The problem is solved in accordance with the invention by provision of a device of the aforesaid type characterised. in that the frame is parallel sided and is positioned inside an outer frame of a trolley, which trolley includes a boarding ramp, a towing bar and means for lifting and inclining the trolley, and in that the outer frame includes at least one fixed circular rail upon which the inner frame is·rotatable.

The invention will be described further, by way of example, with reference to the accompanying drawings, in which:

Fig. 1 is a side elevation of a preferred practical embodiment of the device of the invention;

Fig. 2 is a plan view of a slightly modified embodiment;

Fig. 3 is a front view of the same embodiment as in Fig. 1;

Fig. 4 is a rear view of the same embodiment as in Fig. 1;

Fig. 5 is an enlarged cross-section along the line 5—5 of Fig. 6 of the small portion of one of the circular rails of the device shown in Figs. 1 to 4 illustrating one ball bearing which is guided therein;

Fig. 6 is a cross-section along the line 6—6 of Fig. 5;

Fig. 7 is a schematic diagram, to an enlarged scale, illustrating the attachment of a dorsal plank in the device shown in Figs. 1, 3 and 4;

Fig. 8 is a diagram illustrating the attachment of a neck collar in the device shown in Figs. 1 to 4; and

Fig. 9 is a diagram illustrating locking means for the inner compartment in the device shown in Fig. 1 to 4.

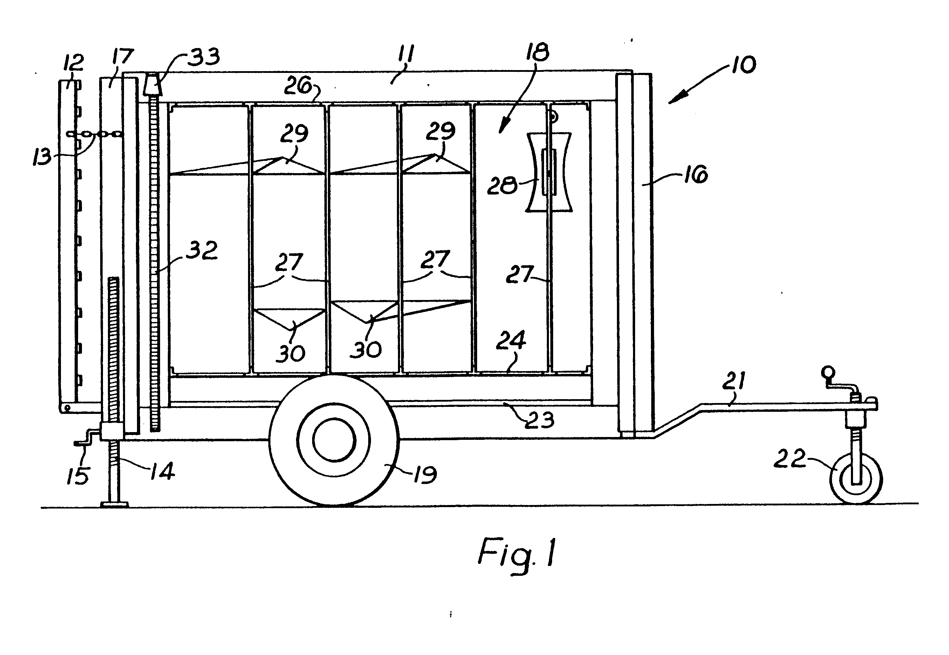

As illustrated in Figs. 1 to 4, a preferred embodiment of the device of the invention for holding and manipulating livestock during medical treatment, particularly treatment for uterine torsion, comprises a trolley 10 having a parallel-sided outer frame 11 of metal bars. At the rear of the trolley 10, a wooden ramp 12 is provided for the loading and unloading of an animal. The ramp 12 can be drawn up with the aid of chains 13. When vertical (Fig. 1) it forms a door which is essential during transportation of the animal. Alternatively, when held substantially horizontal, the ramp 12 can be used as an additional platform for operators.

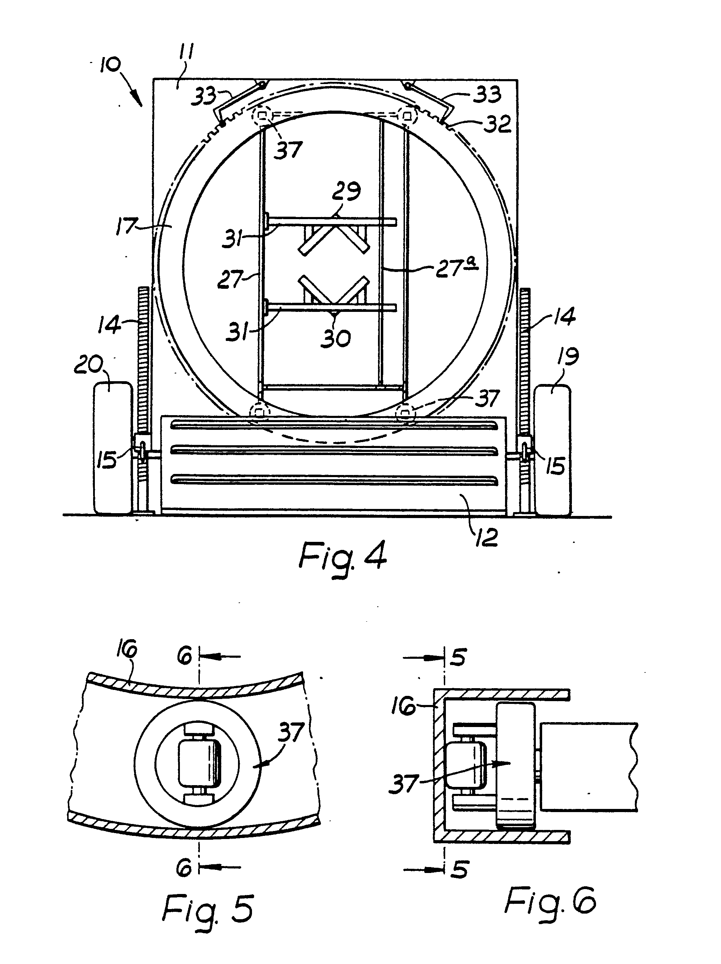

Twin jacks 14 are fixed at each side of the outer frame 11 for lifting the rear part of the trolley 10 so as to provide a proper inclination of the animal during rotation of the animal. The two jacks 14 can be made to descend and ascend simultaneously by means of handles 15 on either side of the frame (Figs. 1 and 4). Similar twin jacks (not shown) may be fixed to the front of the trolley 10 to provide support the trolley 10 during unloading of the animal as well as to lift the trolley while it is detached from the towing vehicle.

Respective circular rails 16, 17 are fixed at the front and rear ends of the frame 11 to permit rotation of an inner frame 18 arranged centrally in the outer frame 11.

The trolley 10 has two wheels, 19, 20, one at each side of the frame 11, somewhat towards its rear end. A detachable towing bar 21 is fixed to the front end of the frame 11 whereby the trolley 10 can be towed by a vehicle. At the front of the towing bar 21 there is a small wheel 22 for local mobility.

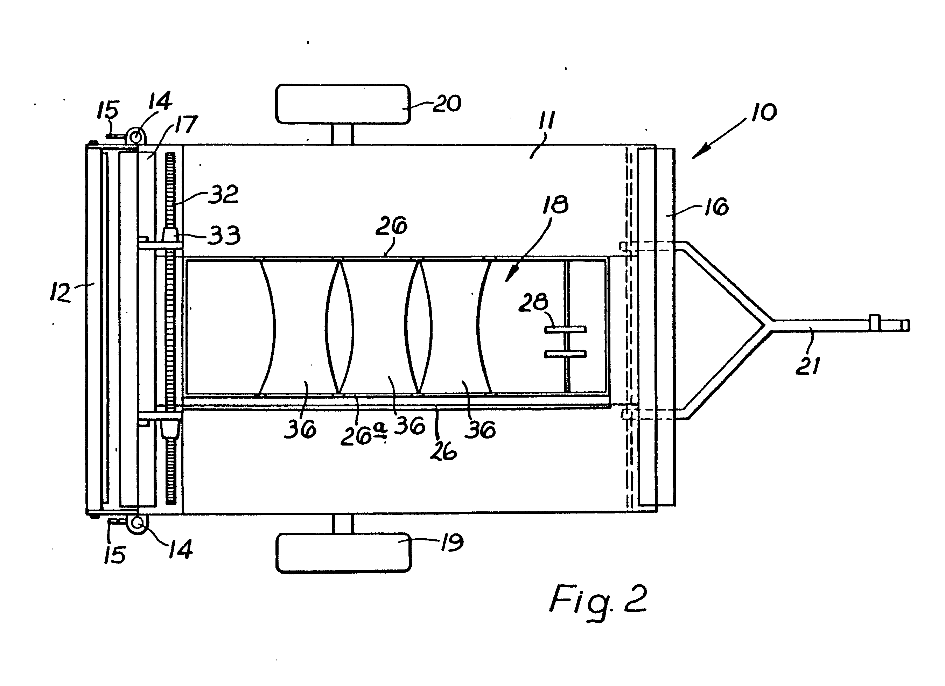

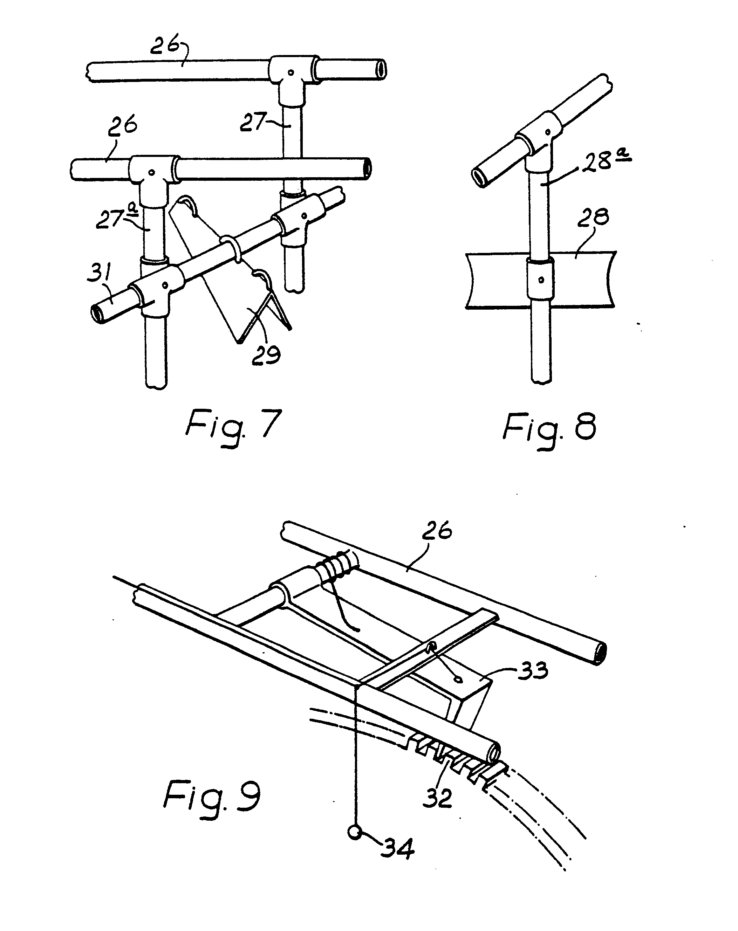

The inner frame or chute 18 is rotatable inside the outer frame 11 on the circular rails 16, 17 with the aid of eight double bearings 37, whihc are shown in detail in Figs. 5 and 6. The inner frame 18 includes a detachable roughened solid platform 23 made of metallic sheet. This is positioned at the base of the compartment 18 for the animal to stand on. The inner frame 18 consists of a tubular member including two longitudinal tubes 24 fixed at the lower part of the frame 18 just above the platform 23 and two upper longitudinal tubes 26. Accordingly when viewed from the side (Fig. 1), the inner frame 18 is divided into a small lower rectangular space through which the platform 23 extends and a large upper rectangular space. The width of the inner frame 18 may effectively be reduced by moving a longitudinal upper bar 26a and longitudinal lower bar 24a which are slidable transversely of the frame 18 (see Fig. 2, 3 and 4).

At one side of the compartment 18 there are five vertical tubes 27 which extend between the upper and lower longitudinal tubes 24, 26 and are slideable therealong longitudinally of the trolley 10. In addition, there are five vertical tubes 27a which extend between the upper and lower slideable bars 26a, 24a and are themselves slideable therealong. Accordingly the positions of these tubes 27, 27a can easily be adjusted for the convenience of the animal as well as the operator.

A two-part curved neckcollar 28 is located between the forwardmost pair of vertical tubes 27, 27a each part of the collar 28 being vertically adjustable on another vertical bar 28a, as shown in Figs. 1, 3 and 8. The collar 28 provides support for the head and neck of the animal during rotation of the animal, and can, of course be moved vertically depending on the height of the animal. The collar 28 can also be adjusted according to the thickness of the animal's neck e.g. by movement of the vertical bars 28a.

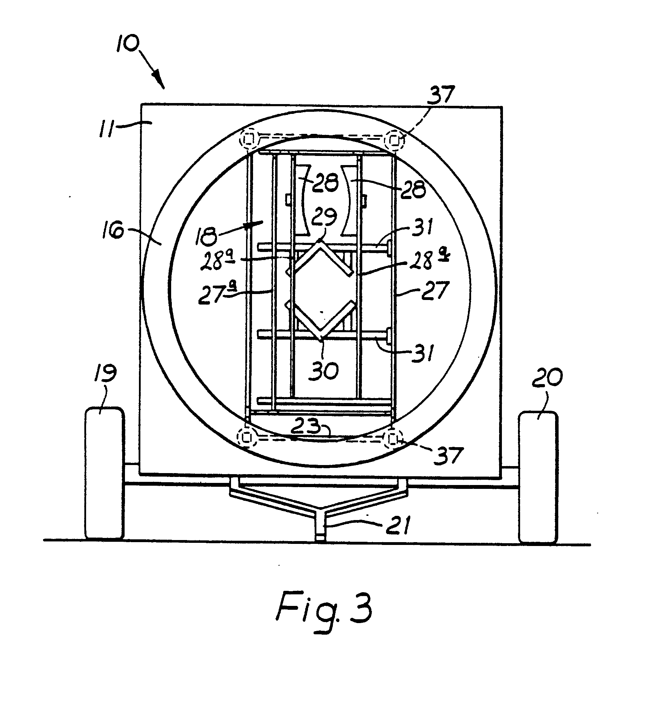

Two dorsal and two ventral detachable angle pieces or planks 29, 30 are fixed on detachable transverse metal bars 31 for providing support to the animal's body. They slide both up, down and transversely by means of slide junctions as shown in Figs. 3, 4 and 7, to adapt to the shape of the particular animal. However, in place of these planks 29, 30, supporting belts 36 may be provided, as shown in Fig. 2.

Locking means are provided in the form of a toothed ring 32 fixed to the inner frame 18 adjacent the rear circular rail 17 and two hooks 33 fixed to the top of the external frame 11, as shown in Figs. 4 and 9. By selective engagement with the toothed ring 32, the hooks 33 serve to hold the inner frame 18 at any desired angle relative to the outer frame 11 so that the animal is most conveniently positioned e.g. during laprohestrotomy. A similar locking means may be provided adjacent the front circular rail. The hooks 33 may be released by means of a handle 34 so that the inner frame 18 can be rotated manually or, preferably, by means of a 12V slow speed motor (not shown).

The trolley 10 is, of course, of sufficient length and height to accommodate various species and breeds of large livestock animals.

## Claims

1. A device for holding and manipulating livestock during medical treatment comprising a rotatable frame (18) inside which an animal may be secured, characterised in that the frame (18) is parallel-sided and is positioned inside an outer frame (11) of a trolley (10), which trolley includes a boarding ramp (12), a towing bar (21) and means for lifting and inclining the trolley (14), and in that the outer frame (11) includes at least one fixed circular rail (16 or 17) upon which the inner frame (18) is rotatable.

2. A device as claimed in claim 1 wherein two fixed circular rails (16, 17) are provided on the outer frame (11) and the inner frame (18) is rotatable thereon by means of eight double bearings (37).

3. A device as claimed in claim 1 or 2 wherein the inner frame (18) comprises a solid detachable lower platform (23), two lower longitudinal metal tubes (24) fixed adjacent the platform (23) and two upper longitudinal tubes (26) thereabove, five vertical tubes (27) slidably connected between these lower and upper tubes (24, 26) at one side of the inner frame (18), five vertical tubes (27a) slideably connected between further lower and upper longitudinal bars (24a, 26a) which are themselves slideable transversely of the inner frame (18), and curved neck collar (28).

4. A device as claimed in claim 3 wherein the neck collar (28) is adjustable according to the height of each animal and according to its neck thickness.

5. A device as claimed in claim 3 or 4, wherein the inner frame includes locking means in the form of hooks (33) and/or gears (32) and/or hydraulically operated equipment effective to hold the inner frame (18) at any desired angle relative to the outer frame (11).

6. A device as claimed in claim 3, 4 or 5 wherein the inner frame (18) includes supporting belts (36) or dorsal and ventral supporting planks (29, 30).

7. A device as claimed in any preceding claims wherein the means for lifting and inclining the trolley comprise manually or hydraulically operated jacks (14) attached to the underside of the trolley (10).

8. A device as claimed in any preceding claim wherein the inner frame (18) is rotatable with the aid of a 12-volt electric motor of low speed.

9. A device as claimed in any preceding claim wherein the towing bar (21) is detachable or capable of being pivoted to either side.

## Patentansprüche

1. Vorrichtung zum Halten und Bewegen von Tieren während einer medizinischen Behandlung, die ein drehbares Gestell (18) einschließt, worin ein Tier gesichert werden kann, dadurch gekennzeichnet, daß das Gestell (18) parallele Seiten aufweist und innerhalb eines äußeren Gestells (11) eines Wagens (10) positioniert ist, der eine Bordrampe (12), eine Zugstange (21) und Mittel (14) zum Heben und Neigen des Wagens einschließt, und daß das äußere Gestell (11) zumindest eine feste kreisförmige Führung/(16 oder 17) einschließt, auf der das innere Gestell (18) drehbar ist.

2. Vorrichtung nach Anspruch 1, dadurch gekennzeichnet, daß zwei feste kreisförmige Führungen/Schienen (16, 17) auf dem äußeren Gestell (11) angeordnet sind und daß das innere Gestell (18) mittels acht Doppelagern (37) darauf drehbar ist.

3. Vorrichtung nach Anspruch 1 oder 2, dadurch gekennzeichnet, daß das innere Gestell (18) eine massive, abnehmbare untere Plattform (23), zwei untere längslaufende, in der Nähe der Plattform (23) befestigte Metallrohre (24) und darüber zwei obere längslaufende Rohre (26), fünf verschiebbar zwischen diesen unteren und oberen Rohren (24, 26) an einer Seite des inneren Gestells (18) verbundene vertikale Rohre (27), fünf verschiebbar zwischen weiteren unteren und oberen Längsstangen (24a, 26a) verbundene vertikale Rohre (27a), die selbst quer zum inneren Gestell (18) verschiebbar sind, und einen gekrümmten Halsbügel (28) umfaßt.

4. Vorrichtung nach Anpruch 3, dadurch gekennzeichnet, daß der Halsbügel (28) entsprechend de Höhe jedes Tieres und seiner Halsdicke einstellbar ist.

5. Vorrichtung nach Anspruch 3 oder 4, dadurch gekennzeichnet, daß das innere Gestell Verriegelungsmittel in Form von Haken (33) und/oder Zahnrädern (32) und/oder hydraulisch betriebenen Einrichtungen einschließt, die das innere Gestell (18) in jedem gewünschten Winkel relativ zum äußeren Gestell (11) halten.

6. Vorrichtung nach den Anspruch 3, 4 oder 5, dadurch gekennzeichnet, daß das innere Gestell (18) Stützbänder/-riemen/-gurte (36) oder Rücken- und Bauchstützplanken (29, 30) einschließt.

7. Vorrichtung nach irgendeinem der vorstehenden Ansprüche, dadurch gekennzeichnet, daß die Mittel um Heben und Neigen des Wagens hand- oder hydraulisch betriebene Winden (14) umfaßt, die mit der Unterseite des Wagens (10) verbunden sind.

8. Vorrichtung nach irgendeinem der vorstehenden Ansprüche, dadurch gekennzeichnet, daß das innere Gestell (18) mit Hilfe eines niedrigtourigen 12-V-Elektromotors drehbar ist.

9. Vorrichtung nach irgendeinem der vorstehenden Ansprüche, dadurch gekennzeichnet, daß die Zugstange (21) abnehmbar oder zu jeder Seite schwenkbar ist.

**Revendications .**

1. Dispositif pour tenir et manipuler du bérail pendant un traitement médical, comprenant un châssis tournant (18) à l'intérieur duquel un animal peut être immobilisé, caractérisé par le fait que ce châssis (18) est à côtés parallèles et est placé à l'intérieur d'un châssis extérieur (11) d'un chariot (10), lequel chariot comporte une rampe d'embarquement (12), une barre d'attelage (21) et des moyens de soulèvement et d'inclinaison du chariot (14), et que le châssis extérieur (11) comporte au moins un rail circulaire fixe (16 ou 17) sur lequel le châssis intérieur (18) peut tourner.

2. Dispositif selon la revendication 1, dans lequel deux rails circulaires fixes (16, 17) sont prévus sur le châssis extérieur (11), et le châssis intérieur (18) peut tourner sur eux au moyen de huit doubles roulements (37).

3. Dispositif selon l'une des revendications 1 et 2, dans lequel le châssis intérieur (18) comprend une plate-forme inférieure amovible pleine (23), deux tubes métalliques longitudinaux inférieurs (24) fixés prè de cette plate-forme (23) et deux tubes longitudinaux supérieurs (26) placés au-dessus, cinq tubes verticaux (27) montés glissants entre ces tubes inférieurs et supérieurs (24, 26) sur un côté du châssis intérieur (18), cinq tubes verticaux (27a) montés glissants entre d'autres barres longtudinales inférieure et supérieur (24a, 26a) qui peuvent ellesmêmes glisser dans la direction transversale du châssis intérieur (18), et un collier courbe (28).

4. Dispositif selon la revendiction 3, dans lequel le collier (28) est réglable en fonction de la hauteur de chaque animal et de la grosseur de son cou.

5. Dispositif selon l'une des revendication 3 et 4, dans lequel le châssis intérieur comporte des moyens de blocage formés de crochets (33) et/ou de roues dentées (32) et/ou d'appareils à commande hydraulique et destinés à immobiliser le châssis intérieur (18) dans toute position angulaire désirée par rapport a châssis extérieur (11).

6. Dispositif selon l'une des revendications 3, 4 et 5, dans lequel le châssis intérieur (18) comporte des bandes de support (36) ou des planches de support dorsales et ventrales (29, 30).

7. Dispositif selon l'une des revendications précédentes, dans lequel les moyens de soulèvement et d'inclinaison du chariot comprennant des vérins à main ou hydrauliques (14) fixés au-dessous du chariot (10).

8. Dispositif selon l'une des revendications précédentes, dans lequel le châssis intérieur (18) peut tourner à l'adie d'une d'un moteur électrique lent de 12 volts.

9. Dispositif selon l'une des revendications précédentes, dans lequel la barre d'attelage (21) est amovible ou peut pivoter vers l'une ou l'autre côté.

*Fig. 1*

0 127 973

Fig. 2

0 127 973

Fig. 3

0 127 973

Fig. 4

Fig. 5

Fig. 6

4

Fig. 7

Fig. 8

Fig. 9